# EUROPÄISCHE PATENTSCHRIFT

(11) **EP 3 041 651 B1**
(45) Veröffentlichungstag und Bekanntmachung des Hinweises auf die Patenterteilung: **23.08.2017**
(21) Anmeldenummer: 14799098.0
(22) Anmeldetag: 08.09.2014
(51) Int. Cl.: B29C 33/00

(54) **WERKZEUG ZUM SPRITZGIESSEN VON KUNSTSTOFFTEILEN**
MOULD FOR INJECTION MOLDING PLASTIC PARTS
MOULE POUR MOULER PAR INJECTION DES OBJETS EN MATIÈRE PLASTIQUE

(30) Priorität: 06.09.2013 DE 202013007964 U
(43) Veröffentlichungstag der Anmeldung: 13.07.2016
(73) Patentinhaber: Braunform GmbH, 79353 Bahlingen (DE)
(72) Erfinder: SCHAAP, Ronald Edward Cornelis, 79098 Freiburg (DE)
(74) Vertreter: mepat Patentanwälte
(86) Internationale Anmeldenummer: PCT/EP2014/002427
(87) Internationale Veröffentlichungsnummer: WO 2015/032509

(56) Entgegenhaltungen:
- WO-A1-02/04186
- WO-A1-2006/027173
- DE-A1- 3 939 728
- DE-A1-102009 041 462
- "ADVERTISEMENT", KUNSTSTOFFBERATER, 201975 1, Bd. 35, Nr. 5, 1. Mai 1990 (1990-05-01), Seite 7, XP000176939, ISSN: 0172-6374

## Beschreibung

Die Erfindung betrifft ein Werkzeug zum Spritzgießen von Kunststoffteilen nach dem Oberbegriff des Anspruchs 1.

Werkzeuge zum Spritzgießen von Kunststoffteilen sind in vielfältigen Ausführungsformen bekannt. Grundsätzlich besteht das Werkzeug aus zwei öffen- sowie schließbaren Werkzeughälften, zwischen denen Formenhohlräume für die zu spritzenden Kunststoffteile ausgebildet sind. Zum Spritzen der Kunststoffteile befinden sich dabei die Werkzeughälften des Werkzeugs im geschlossenen Zustand, sodass der viskose Kunststoff eingespritzt werden kann. Nach dem Erkalten des Kunststoffs werden die beiden Werkzeughälften geöffnet und die ausgehärteten Kunststoffteile ausgestoßen.

WO-A-2006/027173, DE-A-102009041462, DE-A-3939728 zeigen bekannte Werkzeuge aus dem Stand der Technik. Weiterhin ist es bekannt, dass die eine Werkzeughälften eine entnehmbare Baugruppe in Form eines Formeinsatzes aufweisen kann. Dieser Formeinsatz kann elektrische und/oder elektronische und/oder optische Einrichtungen aufweisen. Bei diesen Einrichtungen kann es sich um eine interne Heizeinrichtung im Bereich der Kunststoffzuführung, um elektrische Antriebe, um Sensoren beispielsweise für Temperatur und Druck, um Schalter für die Steuerung und Regelung, um eine Erdung etc. handeln.

Es ist dabei notwendig, dass zwischen der eigentlichen Werkzeughälfte und dem Formeinsatz mit seinen vorbeschriebenen Einrichtungen eine elektrische und/oder optische Verbindung (je nach Einrichtung) vorgesehen ist. Hier kann es sich um Stromversorgungsleitungen, um Signalleitungen oder bei der Erdung um eine einfache elektrische Leitung handeln. Bisher ist es so, dass die Verbindungsleitungen mit ihren Kabeln über entsprechende elektrische Steckverbindungen mühsam entkoppelt werden müssen, dass der Formeinsatz aus der Werkzeughälften entnommen werden kann, Umgekehrt müssen bei einem Einfügen des Formeinsatzes in die Werkzeughälfte diese elektrischen Steckverbindungen wieder miteinander verbunden werden.

Davon ausgehend liegt der Erfindung die Aufgabe zugrunde, bei einem Werkzeug zum Spritzgießen von Kunststoffteilen der eingangs angegebenen Art, die elektrische Steckverbindung zwischen der Werkzeughälfte und dem Formeinsatz zu verbessern.

Diese Aufgabe wird gelöst durch das Werkzeug mit den Merkmalen des Anspruchs 1.

Weiterbildungen des Werkzeugs sind in den Unteransprüchen beansprucht.

Das erfindungsgemäße Werkzeug gemäß einer ersten Ausführungsform zum Spritzgießen von Kunststoffteilen zeichnet sich durch eine verbesserte elektrische Steckverbindung zwischen den elektrischen und/oder elektronischen und/oder optischen Einrichtungen des Formeinsatzes und der zugeordneten Werkzeughälfte aus.

Das erfindungsgemäße Werkzeug zum Spritzgießen von Kunststoffteilen hat zwei öffensowie schließbare Werkzeughälften, zwischen denen Formenhohlräume für die zu spritzenden Kunststoffteile ausgebildet sind, In wenigstens einer der beiden Werkzeughälften ist ein Formeinsatz mit elektrischen und/oder elektronischen und/oder optischen Einrichtungen lösbar angeordnet. Die elektrische und/oder optische Verbindung zu den elektrischen und/oder elektronischen und/oder optischen Einrichtungen über die zugeordnete Werkzeughälfte wird mittels einer elektrischen und/oder optischen Steckverbindung hergestellt. Vorteilhaft ist nun die elektrische und/oder optische Steckverbindung, die durch ein Paar aus Stecker und Buchse gebildet ist, so realisiert, dass eines der Bauteile Stecker und Buchse in der Werkzeughälfte und das entsprechend Andere im Formeinsatzfest angeordnet sind. Vorteilhaft kontaktieren Stecker und Buchse beim Einfügen des Formeinsatzes in die Werkzeughälfte miteinander.

Der Kerngedanke der Erfindung liegt dabei in einer trennbaren Steckverbindung, die dann automatisch betätigt wird, wenn der Formeinsatz von der zugeordneten Werkzeughälften gelöst wird bzw. umgekehrt, wenn ein Formeinsatz in die Werkzeughälfte eingefügt wird. Jedes Mal wird bei der entsprechenden Bewegung des Formeinsatzes automatisch die elektrische Steckverbindung gelöst bzw. wieder hergestellt. Dadurch entfällt vorteilhaft das mühsame Verbinden von entsprechenden Kabeln von Hand bzw. umgekehrt, das Entstöpseln dieser einzelnen Steckverbindungen an den Kabeln. Im Ergebnis bedeutet dies, dass die Kontaktierung bzw. die Lösung der Kontaklierung automatisch beim Einfügen bzw. beim Herausnehmen des Formeinsatzes erfolgt. Durch diese lösbare Steckverbindung wird die Handhabung des Formeinsatzes bei einem Wechsel erheblich vereinfacht. Gleichermaßen werden dadurch die Rüstzeiten erheblich reduziert. Denn bei der Montage bzw. Demontage sind keine Kabel neu zu verdrahten. Grundsätzlich ist dieses Stecksystem für sämtliche Komponenten gedacht und geeignet, welche der Übertragung von Strom (Leistung und Signale) sowie optischen Signalen dienen.

Die Weiterbildung gemäß Anspruch 2 schlägt vor, dass die elektrische Steckverbindung derart ausgebildet ist, dass beim Einfügen des Formeinsatzes in die Warkzeughälfte die Erdung zuerst erfolgt. Umgekehrt wird beim Lösen des Formeinsatzes aus der Werkzeughälfte die Erdung zuletzt unterbrochen.

Eine noch weitere Ausführungsform der Erfindung sieht vor, dass die elektrischen und/oder elektronischen Einrichtungen beispielsweise eine interne Heizeinrichtung im Bereich der Kunststoffzuführung, ein elektrischer Antrieb, ein Sensor zur Temperatur- oder Druckmessung, ein Schalter für die Steuerung und Regelung, und/oder eine Erdung ist oder sind.

Ein Ausführungsbeispiel eines erfindungsgemäßen Werkzeugs zum Spritzgießen von Kunststoffteilen wird nachfolgend anhand der Zeichnungen beschrieben. In diesen zeigt:
- Fig. 1: das Werkzeug im geschlossenen Zustand;
- Fig. 2: das Werkzeug im geöffneten Zustand.

Das Werkzeug zum Spritzgießen von Kunststoffteilen weist zwei Werkzeughälften 1,2 auf, wobei die Werkzeughälfte 1 auf der Düsenseite liegt und die Werkzeughälfte 2 auf der Auswerferseite liegt. Der Werkzeughälfte 1 auf der Düsenseite ist ein Formeinsatz 3 lösbar zugeordnet. In diesem Formeinsatz 3 sind Formenhohlräume 4 schematisch angedeutet. Außerdem weist der Formeinsatz 3 elektrische (wie beispielsweise ein Stellmotor) und/oder elektronische (wie beispielsweise Sensoren für Temperatur und Druck) und/oder optische (für Sensoren) Einrichtungen 5 einschließlich einer Erdung auf.

Diese vorbeschriebenen Einrichtungen 5 müssen mit Strom versorgt bzw. es müssen die entsprechenden Signale (elektrisch oder optisch) übertragen werden. Zu diesem Zweck weist zunächst die Werkzeughälfte 1, welche dem Formeinsatz 3 zugeordnet ist, einen entsprechenden elektrischen und/oder optischen Anschluss 6 auf.

Wesentlich ist jedoch eine elektrische Steckverbindung 7, welche zwischen der Werkzeughälfte 1 und dem Formeinsatz 3 ausgebildet ist. Diese elektrische Steckverbindung 7 besteht aus einer Buchse 8 sowie einem Stecker 9, welche der Werkzeughälfte 1 sowie dem Formeinsatz 3 jeweils fest zugeordnet sind.

### Die Funktionsweise ist wie folgt:

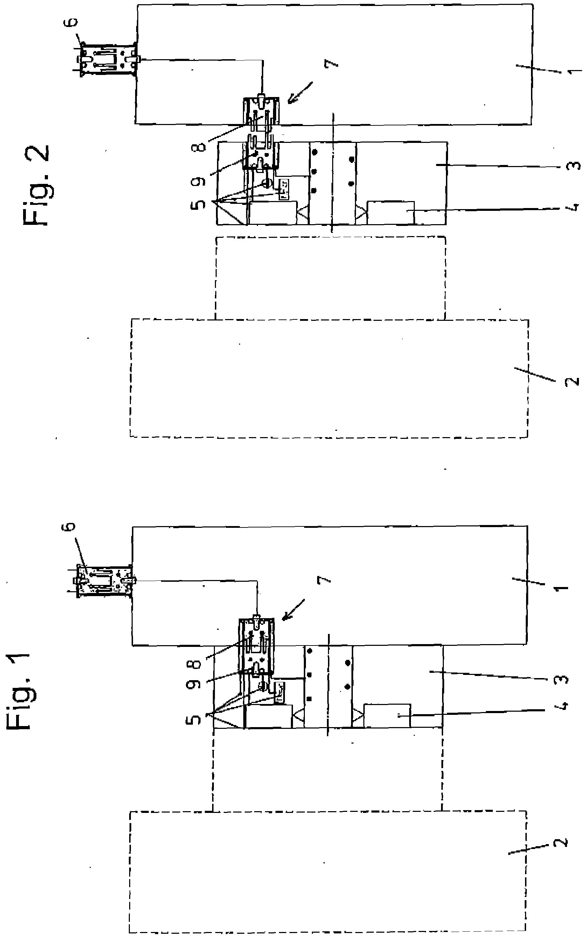

Im Ausgangszustand ist der Formeinsatz 3 mit der in der Zeichnung rechten Werkzeughälfte 1 sowohl mechanisch als auch elektrisch verbunden, indem Stecker 9 und Buchse 8 der elektrischen Steckverbindung 7 miteinander kontaktiert sind. Dies ist in Fig. 1 erkennbar.

Zum Lösen des Formeinsatzes 3 von der Werkzeughälfte 1 wird der Formeinsatz 3 von der Werkzeughälfte 1 entfernt (nachdem zuvor die beiden Werkzeughälften 1,2 auseinandergefahren worden sind), Während des Lösens des Formeinsatzes 3 von der Werkzeughälfte 1 wird gleichzeitig die elektrische Steckverbindung 7 gelöst. Dadurch sind sämtliche Einrichtungen 5 des Formeinsatzes 3 gleichzeitig vom Anschluss 6 der Werkzeughälfte 1 getrennt.

Beim Wiedereinfügen des Formeinsatzes 3 oder beim Einfügen eines neuen Formeinsatzes 3 wird dieser in die zugeordnete Werkzeughälften 1 eingeführt. Gleichzeitig wird bei diesem Einführen die elektnsche Steckverbindung 7 betätigt, indem der Stecker 9 auf die Buchse 8 aufgesteckt wird. Dadurch sind die Einrichtungen 5 mit dem Anschluss 6 elektrisch und/oder optisch verbunden.

### BEZUGSZEICHENLISTE

- 1: Werkzeughälfte
- 2: Werkzeughälfte
- 3: Formeinsatz
- 4: Formenhohlraum
- 5: Einrichtungen
- 6: Anschluss
- 7: elektrische Steckverbindung
- 8: Buchse
- 9: Stecker

## Patentansprüche

1. Werkzeug zum Spritzgießen von Kunststoffteilen,
mit zwei öffen- sowie schließbaren Werkzeughälften (1,2), zwischen denen Formenhohlräume (4) für die zu spritzenden Kunststoffteile ausgebildet sind,
wobei in wenigstens einer der beiden Werkzeughälften (1,2) ein Formeinsatz (3) mit elektrischen und/oder elektronischen Einrichtungen (5) lösbar angeordnet ist und wobei die elektrische Verbindung zu den elektrischen und/oder elektronischen und/oder optischen Einrichtungen (5) über die zugeordnete Werkzeughälfte (1) mittels einer elektrischen Steckverbindung (7) erfolgt,
wobei
die elektrische Steckverbindung (7) durch ein Paar aus Stecker (9) und Buchse (8) gebildet ist,
wobei eines von Stecker (9) und Buchse (8) in der Werkzeughälfte (1) und das entsprechend Andere im Formeinsatz (3) fest angeordnet sind und
die beim Einfügen des Formeinsatzes (3) in die Werkzeughälfte (1) miteinander kontaktieren, **dadurch gekennzeichnet, dass** die elektrische Steckverbindung (7) derart ausgebildet ist, dass beim Einfügen des Formeinsatzes (3) in die Werkzeughälfte (1) die Erdung der elektrischen Steckverbindung (7) zuerst erfolgt, und
wobei die elektrischen und/oder elektronischen Einrichtungen (5) eine interne Heizeinrichtung im Bereich der Kunststoffzuführung, ein elektrischer Antrieb, ein Sensor zur Temperatur- oder Druckmessung und/oder ein Schalter für die Steuerung und Regelung ist/sind.

2. Werkzeug nach Anspruch 1
**dadurch gekennzeichnet,**
**dass** in wenigstens einer der beiden Werkzeughälften (1,2) ein Formeinsatz (3) mit optischen Einrichtungen (5) lösbar angeordnet ist,
wobei die optische Verbindung zu den optischen Einrichtungen (5) über die zugeordnete Werkzeughälfte (1) mittels einer optischen Steckverbindung (7) erfolgt, durch ein Paar aus Stecker (9) und Buchse (8) gebildet ist,
wobei eines von Stecker (9) und Buchse (8) in der Werkzeughälfte (1) und das entsprechend Andere im Formeinsatz (3) fest angeordnet sind und
die beim Einfügen des Formeinsatzes (3) in die Werkzeughälfte (1) miteinander kontaktieren.

## Claims

1. A tool for the injection molding of plastic parts,
having two tool halves (1, 2) that can be opened and closed, with mold cavities (4) for the plastic parts to be injection-molded being formed between said tool halves (1, 2), wherein a mold insert (3) with electric and/or electronic devices (5) is arranged in at least one of the two tool halves (1, 2) in a detachable manner and
wherein the electric connection to the electric and/or electronic and/or optical devices (5) is achieved across the allocated tool half (1) by means of an electric plug connector (7),
wherein
the electric plug connector (7) is formed by a pair consisting of a male connector (9) and a female connector (8),
wherein one of the male connector (8) and the female connector (8) is fixedly arranged in the tool half (1) and the correspondingly other one is fixedly arranged in the mold insert (3) and
contact each other when the mold insert (3) is inserted into the tool half (1), **characterised in that**
the electric plug connector (7) is formed in such a manner that, when the mold insert (3) is inserted into the tool half (1), the electric plug connector (7) is the first to be grounded, and
wherein the electric and/or electronic devices (5) are an internal heater in the vicinity of the plastic supply, an electric drive, a sensor for temperature or pressure measurement, and/or a switch for controlling and regulating.

2. Tool according to Claim 1,
**characterized in that**
a mold insert (3) with optical devices (5) is arranged in at least one of the two tool halves (1, 2) in a detachable manner,
wherein the optical connection to the optical devices (5) is achieved across the allocated tool half (1) by means of an optical plug connector (7) and is formed by a pair consisting of a male connector (8) and a female connector (8),
wherein one of the male connector (9) and the female connector (8) is fixedly arranged in the tool half (1) and the correspondingly other one is fixedly arranged in the mold insert (3) and
contact each other when the mold insert (3) is inserted into the tool half (1).

## Revendications

1. Moule pour mouler par injection des objets en matière plastique, comprenant deux moitiés de moule (1, 2) pouvant s'ouvrir et se refermer, entre lesquelles des cavités de moule (4) sont formées pour les objets en matière plastique à mouler par injection, dans lequel une garniture de moule (3) avec des dispositifs électriques et/ou électroniques (5) est disposée de façon amovible dans au moins une des deux moitiés de moule (1, 2), et dans lequel la connexion électrique vers les dispositifs électriques et/ou électroniques et/ou optiques (5) s'effectue par le biais de la moitié de moule (1) correspondante au moyen d'un enfichage électrique (7),
dans lequel
l'enfichage électrique (7) est formé par une paire d'une fiche (9) et d'une prise (8),
dans lequel une de la fiche (9) et de la prise (8) est disposée fixe dans la moitié de moule (1) et l'autre correspondante dans la garniture de moule (3) et
qui viennent en contact l'une avec l'autre à l'insertion de la garniture de moule (3) dans la moitié de moule (1), **caractérisé en ce que**
l'enfichage électrique (7) est ainsi formé que lors de l'insertion de la garniture de moule (3) dans la moitié de moule (1), la mise à la terre de l'enfichage électrique (7) s'effectue d'abord, et
dans lequel les dispositifs électriques et/ou électroniques (5) sont un dispositif de chauffage interne au niveau de l'alimentation de matière plastique, un entraînement électrique, un capteur pour mesurer la température ou la pression et/ou un interrupteur pour commander et réguler.

2. Moule selon la revendication 1,
**caractérisé en ce qu'**une garniture de moule (3) avec des dispositifs optiques (5) est disposée de façon amovible dans au moins une des deux moitiés de moule (1, 2), dans lequel la connexion optique vers les dispositifs optiques (5) s'effectue par le biais de la moitié de moule (1) correspondante au moyen d'un enfichage optique (7) optique, par une paire d'une fiche (9) et d'une prise (8), dans lequel une de la fiche (9) et de la prise (8) est disposée fixe dans la moitié de moule (1) et l'autre correspondante dans la garniture de moule (3) et
qui viennent en contact l'une avec l'autre à l'insertion de la garniture de moule (3) dans la moitié de moule (1).
